# EUROPEAN PATENT APPLICATION

(11) **EP 1 862 240 A1**
(43) Date of publication of application: **05.12.2007**
(21) Application number: 06728870.4
(22) Date of filing: 10.03.2006
(51) Int. Cl.: B23B 27/14, B23B 51/00, B23C 5/16

(54) **INDEXABLE INSERT**

(30) Priority: 25.03.2005 JP 2005088513
(71) Applicant: Sumitomo Electric Hardmetal Corp., Itami-shi, Hyogo 664-0016 (JP)
(72) Inventor: OMORI, Naoya, ta 1-chome, Itami-shi, Hyogo, 6640016 (JP); OKADA, Yoshio, ta 1-chome, Itami-shi, Hyogo, 6640016 (JP); ITOH, Minoru, ta 1-chome, Itami-shi, Hyogo, 6640016 (JP); OKUNO, Susumu, ta 1-chome, Itami-shi, Hyogo, 6640016 (JP); IMAMURA, Shinya, ta 1-chome, Itami-shi, Hyogo, 6640016 (JP)
(74) Representative: Grünecker, Kinkeldey, Stockmair & Schwanhäusser Anwaltssozietät
(86) International application number: PCT/JP2006/304702
(87) International publication number: WO 2006/103899

(57) **Abstract**

An indexable insert (1) according to the present invention has at least a rake face (2) and a seating face (5). The indexable insert (1) includes a substrate and a coating formed on the substrate. The substrate is exposed in the seating face (5) without the coating formed thereon.

## Description

### Technical Field

The present invention relates to indexable inserts (throw-away inserts) detachably attached to cutting tools for use in cutting of workpieces.

### Background Art

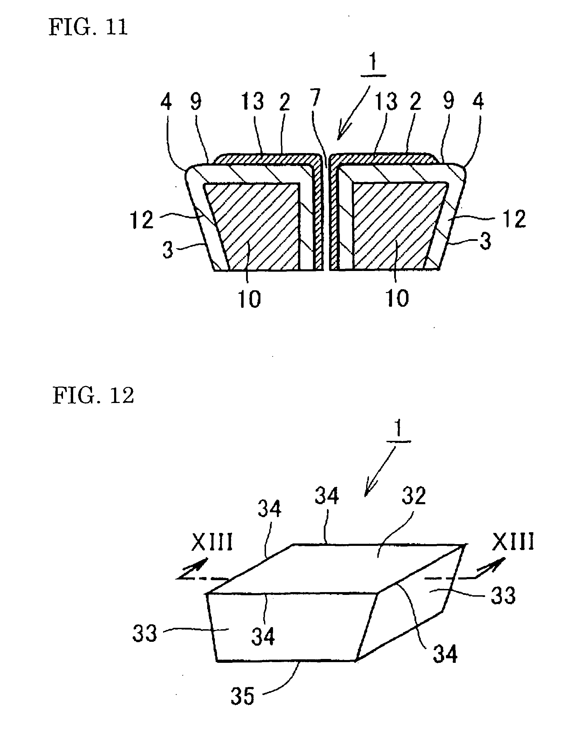

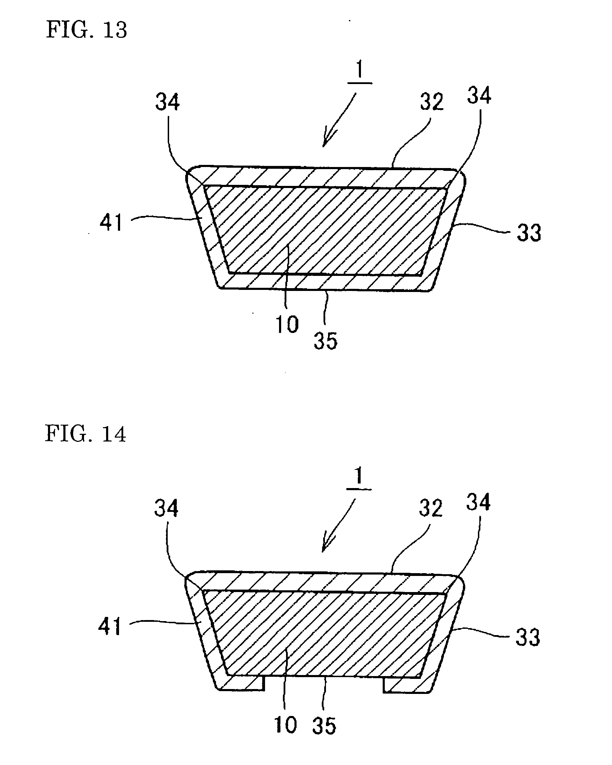

Conventionally, various workpieces are cut using indexable inserts detachably attached to cutting tools. Referring to Fig. 12, a typical indexable insert has a top surface 32, side surfaces 33, and a bottom surface 35. The bottom surface 35 is often detachably attached to a cutting tool. A surface detachably attached to a cutting tool is called a seating face. With the bottom surface 35 being a seating face, the top surface 32 is positioned on the side where it comes into contact with chips during the cutting of a workpiece; such a surface is called a rake face. The side surfaces 33 are positioned on the side where they come into contact with the workpiece; such surfaces are called flank faces. Portions corresponding to ridges 34 defined between the rake face and the flank faces are called cutting-edge ridge portions, which play a key role in cutting. Referring to Fig. 13, such an indexable insert often includes a substrate 10 coated with a hard material 41.

Increasing runout accuracy is important in the cutting of workpieces using a cutting tool equipped with indexable inserts. Runout refers to a variation in the attachment positions (heights of cutting edges) of indexable inserts on the cutting tool, and increasing runout accuracy means the reduction of runout. A large runout impairs cutting accuracy and thus degrades the appearance and quality of workpieces.

Various attempts have therefore been made to increase runout accuracy, although most of them are intended to improve the attachment structure of a cutting tool, and few approaches to improving indexable inserts themselves have been proposed. According to one of such few proposals, as shown in Fig. 14, part of the bottom surface 35 of the indexable insert is not coated with the hard material 41 so that the insert can be more stably seated on a cutting tool (Japanese Patent No. 2751277 (Japanese Unexamined Patent Application Publication No. 02-163361 (Patent Document 1))).

This proposal, however, has difficulty in constantly ensuring seating stability, and a further increase in runout accuracy has been demanded.
Patent Document 1: Japanese Patent No. 2751277 (Japanese Unexamined Patent Application Publication No. 02-163361)

### Disclosure of Invention

### Problems to be Solved by the Invention

An object of the present invention, which has been created in light of the above circumstances, is to provide an indexable insert with significantly increased runout accuracy.

### Means for Solving the Problems

As a result of intensive studies to achieve the above object, the inventors have found that an indexable insert can be attached to a cutting tool with increased runout accuracy if the insert has a highly smooth seating face. The inventors have made further studies based on the findings, thus completing the invention.

That is, an indexable insert according to the present invention has at least a rake face and a seating face. The indexable insert includes a substrate and a coating formed on the substrate. The substrate is exposed in the seating face without the coating formed thereon. The seating face is preferably a polished surface.

The coating can include at least one layer formed of a compound containing at least one element selected from the group consisting of the elements of Groups IVA (such as titanium, zirconium, and hafnium), VA (such as vanadium, niobium, and tantalum), and VIA (such as chromium, molybdenum, and tungsten) of the periodic table of elements, aluminum, and silicon and at least one element selected from the group consisting of carbon, nitrogen, oxygen, and boron.

The coating preferably includes at least an aluminum oxide layer. The coating can include at least a TiBN layer and an aluminum oxide layer formed thereon. The coating can also include at least a TiBNO layer and an aluminum oxide layer formed thereon. The outermost layer of the coating is preferably an aluminum oxide layer at least in a portion involved in cutting. The aluminum oxide layer can be exposed as the outermost layer of the coating at least in the portion involved in cutting by removing any layer comprising a compound other than aluminum oxide from over the aluminum oxide layer. The aluminum oxide layer preferably has compressive residual stress.

The coating can include a base layer and a usage-indicating layer formed on the base layer. The usage-indicating layer is preferably formed on the base layer in part or the entirety of a portion of the rake face other than a portion involved in cutting. The usage-indicating layer is also preferably formed on the base layer in part or the entirety of a flank face.

The substrate is preferably formed of a cemented carbide, a cermet, a high-speed steel, a ceramic, a sintered cubic boron nitride compact, a sintered diamond compact, or a sintered silicon nitride compact.

The indexable insert is preferably used for drilling, end milling, milling, turning, metal sawing, gear cutting, reaming, tapping, or crankshaft pin milling. The indexable insert is preferably a positive insert.

### Advantages

With the structure described above, the indexable insert according to the present invention can achieve significantly increased runout accuracy.

### Brief Description of the Drawings

Figure 1 is a schematic perspective view of an indexable insert.
Figure 2 is a schematic sectional view taken along line II-II of Fig. 1.
Figure 3 is a schematic sectional view of an indexable insert having grooves in a seating face thereof.
Figure 4 is a schematic enlarged sectional view of a groove.
Figure 5 is a schematic perspective view of an indexable insert having a through-hole.
Figure 6 is a schematic sectional view taken along line VI-VI of Fig. 5.
Figure 7 is a schematic sectional view of an indexable insert having a usage-indicating layer formed in a portion of a rake face other than portions involved in cutting.
Figure 8 is a schematic sectional view of an indexable insert having a usage-indicating layer formed in flank faces.
Figure 9 is a schematic sectional view of an indexable insert having a usage-indicating layer formed in portions of flank faces other than portions involved in cutting.
Figure 10 is a schematic sectional view of an indexable insert having a usage-indicating layer formed in a portion of a rake face other than portions involved in cutting and in portions of flank faces other than portions involved in cutting.
Figure 11 is a schematic sectional view of an indexable insert having a usage-indicating layer formed on a hole wall of a through-hole.
Figure 12 is a schematic perspective view of a known indexable insert.
Figure 13 is a schematic sectional view taken along line XIII-XIII of Fig. 12.
Figure 14 is a schematic perspective view of a known indexable insert having a bottom surface that is partially uncoated with a hard material.

### Reference Numerals

- 1: indexable insert
- 2: rake face
- 3: flank face
- 4: cutting-edge ridge portion
- 5: seating face
- 6: groove
- 7: through-hole
- 9 and 91: portion involved in cutting
- 10: substrate
- 11: coating
- 12: base layer
- 13: usage-indicating layer
- 32: top surface
- 33: side surface
- 34: ridge
- 35: bottom surface
- 41: hard material

### Best Mode for Carrying Out the Invention

The present invention will now be described in more detail. Embodiments of the invention will be described with reference to the attached drawings, where like reference numerals indicate like or corresponding portions. The drawings are intended merely for illustration purposes, and the thickness of each coating, the size ratio of the coating to a substrate, and the size ratio of corner radius (R) differ in the drawings from their actual values. In the present application, the terms "rake face", "flank face", "seating face", and "cutting-edge ridge portion" are used as concepts not only including those positioned in the outermost surfaces of an indexable insert, but also including, for example, corresponding portions positioned in surfaces of a substrate and in surfaces of or inside individual layers of a coating.

### [Indexable insert]

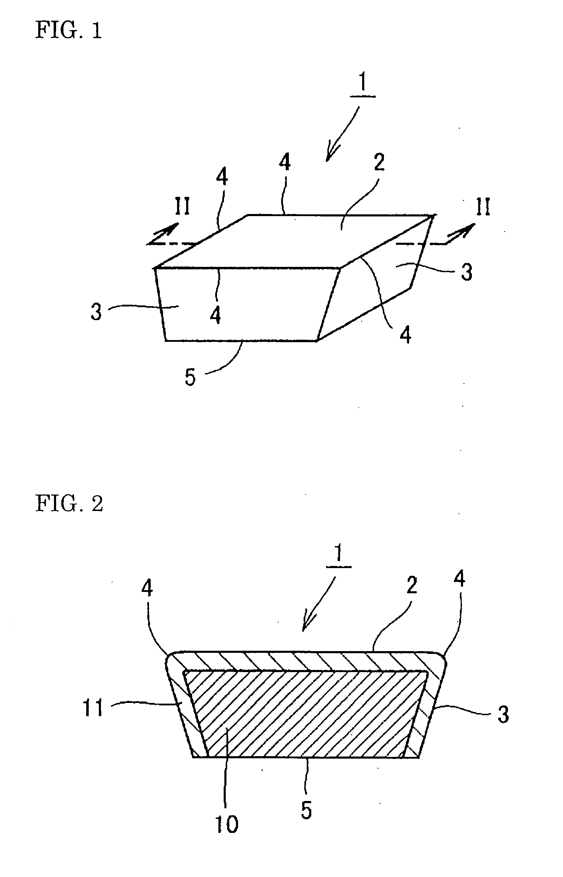

The indexable insert according to the present invention is detachably attached to various cutting tools for use in cutting of various workpieces. Referring to Fig. 1, an indexable insert 1 has at least a rake face 2 and a seating face 5. Cutting-edge ridge portions 4 are defined between the rake face 2 and flank faces 3. The flank faces 3 are connected to the rake face 2 via the cutting-edge ridge portions 4. With the rake face 2 being the top surface of the indexable insert 1, the seating face 5 is located at a position corresponding to the bottom surface of the indexable insert 1 for attachment to a cutting tool.

Referring to Fig. 2, the indexable insert 1 according to the present invention includes a substrate 10 and a coating 11 formed on surfaces of the substrate 10 other than the seating face 5. The indexable insert 1 is characterized in that the substrate 10 is exposed in the seating face without the coating 11 formed thereon. The coating 11 is illustrated as being composed of a single layer in the schematic sectional view of Fig. 2, although the coating according to the present invention is not limited to such a structure, as will be described later. Thus, a coating formed on surfaces of an indexable insert other than a seating face can improve the properties of the insert, such as toughness and wear resistance, to significantly increase the durability (service life) thereof.

Such an indexable insert can be applied to, for example, drilling, end milling, milling, turning, metal sawing, gear cutting, reaming, tapping, or crankshaft pin milling.

The indexable insert according to the present invention is preferably a positive insert (insert having a rake face that forms an acute angle with flank faces), although the insert shape is not limited to any particular shape. The present invention is more effective for a positive insert because this type of insert is used only on either the top or bottom surface thereof and thus generally has a large seating face. The present invention can also be applied to single-sided negative inserts (inserts having a rake face that forms an angle of 90° or more with flank faces) and inserts used in a perpendicular orientation. The indexable insert according to the present invention may or may not have a chip breaker. The cutting-edge ridge portions can be formed in the shape of a sharp edge (ridge defined between a rake face and a flank face), a horned edge (formed by rounding a sharp edge), a negative land (chamfered edge), or a combination of a horned edge and a negative land.

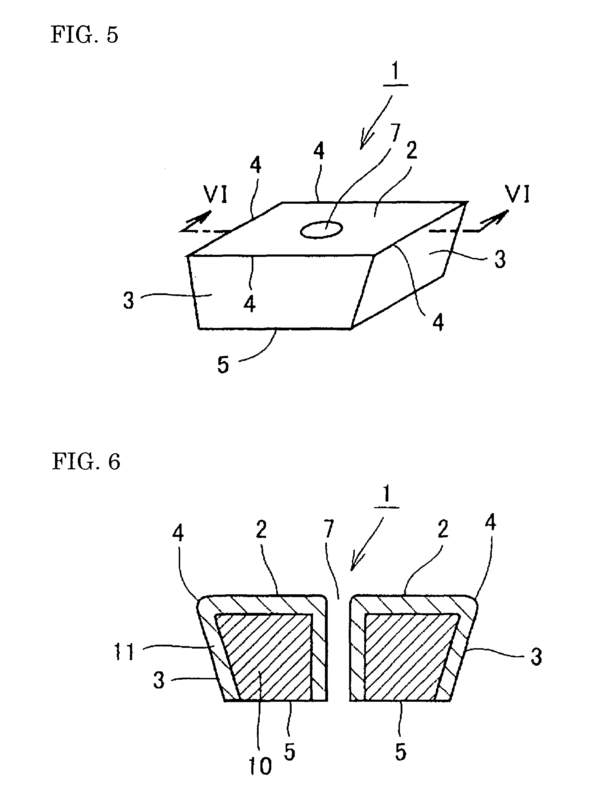

Referring to Fig. 5, the indexable insert according to the present invention may have a through-hole 7 extending from the rake face 2 to the seating face 5. The through-hole 7 is used as a fastening hole for attaching the indexable insert 1 to a cutting tool. If necessary, other fastening means may be provided in addition to or instead of the fastening hole.

### [Seating face]

The seating face of the indexable insert according to the present invention is characterized in that the substrate is exposed in the seating face without the coating formed thereon. The phrase "without the coating formed thereon" is a concept including the case where the coating is removed from the seating face or is originally not formed thereon. The seating face is preferably a polished surface. Such a seating face has excellent smoothness and flatness and thus significantly increases runout accuracy. The term "polished surface" used in the present invention refers to a surface of a substrate (with an untreated sintered surface) planarized by polishing or grinding (hereinafter simply referred to as polishing). The polished surface preferably has a surface roughness Rₐ (arithmetic average height; JIS B0601:2001) of 0.5 µm or less. If the surface roughness Rₐ exceeds 0.5 µm, the seating face may fail to provide excellent runout accuracy because of decreased smoothness and flatness. More preferably, the seating face has a surface roughness Rₐ of 0.2 µm or less, still more preferably 0.15 µm or less, particularly preferably 0.1 µm or less. In the present application, even an unpolished surface should be regarded as a polished surface if it has a surface roughness Rₐ of 0.5 µm or less.

The polishing method used is not limited to any particular method, and known polishing methods can be used. Examples of such methods include polishing using a diamond grinding wheel, a SiC grinding wheel, a resin-bonded grinding wheel, an elastic grinding wheel, or an electroplated grinding wheel; shot blasting; wet blasting; and polishing using a diamond brush, a SiC brush or a huff.

The seating face described above can provide significantly increased seating stability and runout accuracy when attached to a cutting tool. Such an excellent effect is unique and cannot be achieved with an untreated surface (with a sintered surface) of a substrate or a seating face having a coating formed in a certain portion thereof, as proposed in Patent Document 1.

For the indexable insert according to the present invention, as shown in Fig. 2, the substrate 10 is exposed in the seating face 5 because the coating 11 is removed from the seating face 5 or is originally not formed thereon. If the substrate 10 is polished in the seating face in advance before the coating 11 is formed, a polished surface can be formed as the seating face 5 only by removing the coating 11 through, for example, blasting or grinding using any type of grinding wheel. A polished surface may also be formed by further polishing after, for example, blasting. If the coating 11 is formed on the substrate 10 with the seating face left untreated (with a sintered surface), a polished surface is preferably formed by removing the coating 11 through, for example, blasting and then polishing the exposed surface of the substrate 10. If, for example, the seating face 5 is masked (for example, using a jig in the case where the coating 11 is formed by PVD, as described later) so that the coating 11 is originally not formed thereon, the seating face 5 may be polished before and/or after the formation of the coating 11.

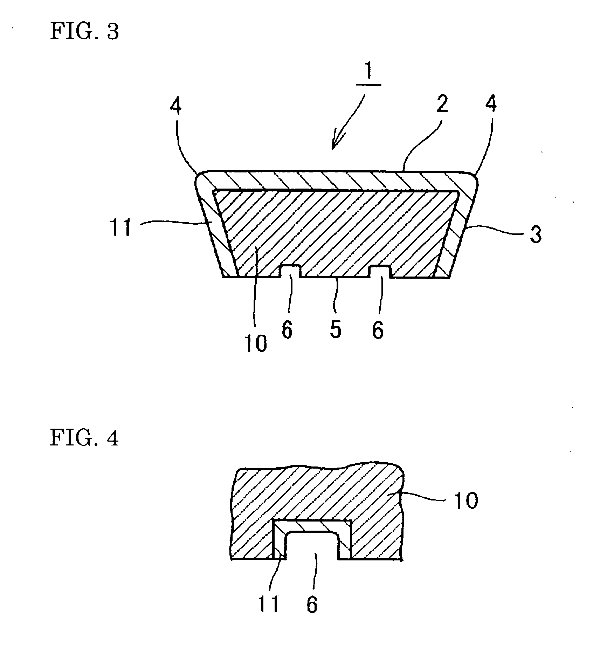

In Fig. 2, there is no coating on the entire seating face 5. The manner in which the substrate is exposed in the seating face is not limited to that shown in Fig. 2 in the present invention. For example, the coating 11 may be left in portions such as grooves or recesses (hereinafter simply referred to as recesses) that do not come into direct contact with a cutting tool. In Fig. 3, for example, the coating 11 is left in recesses 6. Such a case does not depart from the scope of the present invention. That is, the substrate is regarded as being exposed in the seating face if the coating is removed therefrom or is originally not formed thereon (i.e., no coating formed thereon), even with the coating 11 remaining in the recesses 6 of the seating face, as shown in Fig. 4 (in other words, the flat surface other than the recesses 6 defines the seating face). Such a residual coating does not affect seating stability when the indexable insert is attached to a cutting tool. From this viewpoint, the inner surfaces of the recesses 6 may have a surface roughness Rₐ exceeding 0.5 µm. The seating face is regarded as a polished surface irrespective of whether the coating 11 remains in the recesses 6 if the portion other than the recesses 6 has a surface roughness Rₐ of 0.5 µm or less.

If the indexable insert 1 has the through-hole 7, as shown in Fig. 5, the coating 11 may be optionally formed on a hole wall of the through-hole 7, as shown in Fig. 6.

The seating face 5 may be polished selectively or together with the surfaces other than the seating face 5, including the rake face 2 and the flank faces 3.

### [Substrate]

The substrate used for the indexable insert according to the invention is not limited to any particular substrate, and any known substrate used for indexable inserts can be used. Examples of such a substrate include cemented carbides (including WC-based cemented carbides which contain cobalt in addition to WC and may further contain, for example, a carbide, nitride, or carbonitride of titanium, tantalum, or niobium), cermets (those mainly containing, for example, TiC, TiN, or TiCN), high-speed steels, ceramics (including titanium carbide, silicon carbide, silicon nitride, aluminum nitride, aluminum oxide, and mixtures thereof), sintered cubic boron nitride compacts, sintered diamond compacts, and sintered silicon nitride compacts. If a cemented carbide is used for the substrate, the present invention is effective even if the cemented carbide contains free carbon or has an abnormal phase called ε phase in its structure.

The substrate may have a modified surface. For example, if a cemented carbide is used for the substrate, a β-free layer may be formed thereon. If a cermet is used for the substrate, a hardened surface layer may be formed thereon. The present invention is also effective for such modified surfaces.

### [Coating]

The coating according to the present invention is formed on the substrate to improve the properties of the indexable insert, such as toughness and wear resistance, thus significantly enhancing the durability (service life) thereof.

The coating can include at least one layer formed of a compound containing at least one element selected from the group consisting of the elements of Groups IVA, VA, and VIA of the periodic table of elements, aluminum, and silicon and at least one element selected from the group consisting of carbon, nitrogen, oxygen, and boron.

Preferred examples of the compound used for the coating include TiC, TiN, TiCN, TiCNO, TiB₂, TiBN, TiBNO, TiCBN, ZrC, ZrO₂ HfC, HfN, TiAlN, AlCrN, CrN, VN, TiSiN, TiSiCN, AlTiCrN, TiAlCN, Al₂O₃, ZrCN, ZrCNO, AIN, AICN, ZrN, and TiAlC.

The coating preferably has a thickness (the total thickness if the coating includes two or more layers) of 0.01 to 20 µm. If the thickness falls below 0.01 µm, the coating may fail to satisfactorily deliver the advantageous properties described above. Even if the thickness exceeds 20 µm, the effect of the coating is not correspondingly enhanced, and such a coating is economically disadvantageous.

The coating can be directly formed on the substrate. The method used for forming (depositing) the coating is not limited to any particular method, and the coating may be formed by any method, for example, a known method such as chemical vapor deposition (CVD) or physical vapor deposition (PVD, for example, sputtering). If the coating is formed by CVD, medium-temperature CVD (MT-CVD) is preferably used, and a titanium carbonitride (TiCN) layer formed by this method is preferred for its excellent wear resistance. While conventional CVD processes are performed at about 1,020°C to 1,030°C, MT-CVD is performed at a relatively low temperature, namely, about 850°C to 950°C. Use of MT-CVD therefore contributes to a reduction in damage to the substrate due to heating during deposition. Accordingly, a layer adjacent to the substrate is preferably formed by MT-CVD. A nitrile gas, particularly acetonitrile (CH₃CN), is preferably used for deposition in terms of volume production. A multilayer coating including a layer formed by MT-CVD as described above and a layer formed by high-temperature CVD (HT-CVD, one of the conventional CVD processes mentioned above) may be preferred because the coating can exhibit enhanced interlayer adhesion.

Among layers formed of the compounds described above, the coating according to the present invention preferably includes at least an aluminum oxide (Al₂O₃) layer because the layer excels in the effect of enhancing wear resistance and adhesion resistance to a workpiece. While an aluminum oxide layer has such excellent properties, a study conducted by the inventors has revealed that an aluminum oxide layer formed on a substrate tends to become thick at edges (periphery) of surfaces of the substrate. If the substrate is entirely coated with the layer, the same thickness is difficult to define in the center of the surfaces of the substrate and at the edges thereof (that is, a flat seating face is difficult to form). This results in decreased runout accuracy. According to the present invention, in contrast, the seating face has no coating, as described above. The indexable insert can therefore achieve increased runout accuracy with the advantageous effect of the coating including the aluminum oxide layer, that is, the excellent effect of enhancing wear resistance and adhesion resistance to a workpiece. The crystal structure of the aluminum oxide used for the coating is not limited to any particular structure, and examples thereof include α-Al₂O₃, γ-Al₂O₃, and κ-Al₂O₃.

The outermost layer of the coating according to the present invention is preferably formed of an aluminum oxide layer at least in portions involved in cutting because, as described above, the layer excels in wear resistance and adhesion resistance to a workpiece. The portions involved in cutting refer to portions substantially involved in cutting of a workpiece (portions that can come into contact with chips from the workpiece), specifically, regions extending from the cutting-edge ridge portions both in the rake-face direction and in the flank-face direction by a width of at least 0.01 mm in each direction. The width is generally 0.05 mm or more, more generally 0.1 mm or more. A cutting-edge ridge portion, as described above, is a concept including a sharp edge, a horned edge, a negative land, and a combination of a horned edge and a negative land.

To expose the aluminum oxide layer as the outermost layer of the coating at least in the portions involved in cutting, preferably, layers formed of a compound other than aluminum oxide (which are optionally formed, including, for example, a layer for checking whether cutting edges have been used, as it is called an indicating layer or a color layer (i.e., usage-indicating layer described later)) are formed on the entire aluminum oxide layer in the production process of the indexable insert before the layers are removed from over the aluminum oxide layer. This contributes to excellent production efficiency.

It may be preferred that the coating according to the present invention include at least a titanium boronitride (TiBN) layer and an aluminum oxide layer formed thereon. The TiBN layer has excellent adhesion to the aluminum oxide layer and can thus be formed as an underlying layer for the aluminum oxide layer to effectively prevent it from peeling off. The TiBN layer can provide a particularly excellent effect in the case where there is substantially no coating on a polished seating face, as in the present application, because the aluminum oxide layer can peel off easily during polishing.

The TiBN layer can impart a tinge of yellow to the appearance of the insert because the layer has a yellow or gold color which can be observed through the aluminum oxide layer. The TiBN layer can thus facilitate determination of whether the cutting-edge ridge portions of the insert have been used. When one of the cutting-edge ridge portions is used, an area around the used portion is discolored to, for example, black.

In particular, the TiBN layer is preferably formed of a titanium boronitride represented by the formula TiB_{X}N_{Y} (wherein X and Y satisfy 0.001 < X/(X+Y) < 0.04 based on atomic percent). Such a layer has particularly excellent adhesion to aluminum oxide and is therefore advantageous for solving the problem of peeling.

If X/(X+Y) is 0.001 or less, the TiBN layer can have poor adhesion to the aluminum oxide layer. If X/(X+Y) is 0.04 or more, the TiBN layer has increased reactivity with a workpiece. Such a TiBN layer can react with the workpiece when exposed and causes a persistent welding on the cutting edges, thus degrading the appearance of the workpiece. More preferably, X/(X+Y) falls within the range of 0.003 < X/(X+Y) < 0.02. In the above formula, the ratio between the number of titanium atoms and the total number of boron atoms and nitrogen atoms does not have to be 1:1, unlike the known art.

The TiBN layer preferably has a thickness of 0.1 to 3 µm, more preferably 0.2 to 2 µm. If the thickness falls below 0.1 µm, the TiBN layer can be insufficient in terms of the effect of enhancing adhesion to the aluminum oxide layer. Even if the thickness exceeds 3 µm, the effect is not correspondingly enhanced, and such a layer is economically disadvantageous.

The TiBN layer can be formed on the substrate directly or with another layer disposed therebetween. The method used for forming (depositing) the TiBN layer is not limited to any particular method, and the layer may be formed by any method, for example, a known method such as chemical vapor deposition (CVD) or physical vapor deposition (PVD).

It may also be preferred that the coating according to the present invention include at least a titanium boronitroxide (TiBNO) layer and an aluminum oxide layer formed thereon. The TiBNO layer, like the TiBN layer, has excellent adhesion to the aluminum oxide layer and can thus be formed as an underlying layer for the aluminum oxide layer to effectively prevent it from peeling off. The TiBNO layer can provide a particularly excellent effect in the case where there is substantially no coating on a polished seating face, as in the present application, because the aluminum oxide layer can peel off easily during polishing.

The TiBNO layer can impart a tinge of yellow to the appearance of the insert because the layer has a yellow or gold color which can be observed through the aluminum oxide layer. The TiBNO layer can thus facilitate determination of whether the cutting-edge ridge portions of the insert have been used. When one of the cutting-edge ridge portions is used, an area around the used portion is discolored to, for example, black.

In particular, the TiBNO layer is preferably formed of a titanium boronitroxide represented by the formula TiB_{X}N_{Y}O_{Z} (wherein X, Y, and Z satisfy 0.0005 < X/(X+Y+Z) < 0.04 and 0 < Z/(X+Y+Z) < 0.5 based on atomic percent). Such a layer has particularly excellent adhesion to aluminum oxide and is therefore advantageous for solving the problem of peeling.

If X/(X+Y+Z) is 0.0005 or less, the TiBNO layer can have poor adhesion to the aluminum oxide layer. If X/(X+Y) is 0.04 or more, the TiBNO layer has increased reactivity with a workpiece. Such a TiBNO layer can react with the workpiece when exposed and causes a persistent welding on the cutting edges, thus degrading the appearance of the workpiece. More preferably, X/(X+Y+Z) falls within the range of 0.003 < X/(X+Y+Z) < 0.02.

If the TiBNO layer contains no oxygen, namely, Z = 0, then the layer is equivalent to a TiBN layer. If Z/(X+Y+Z) is 0.5 or more, the TiBNO layer can have increased film hardness but decreased toughness and fracture resistance. More preferably, Z/(X+Y+Z) falls within the range of 0.0005 < Z/(X+Y+Z) < 0.3. In the above formula, the ratio between the number of titanium atoms and the total number of boron atoms, nitrogen atoms, and oxygen atoms does not have to be 1:1, unlike the known art.

The TiBNO layer not only has excellent adhesion to the aluminum oxide layer, like the TiBN layer, but also has higher hardness than the TiBN layer.

The TiBNO layer preferably has a thickness of 0.1 to 3 µm, more preferably 0.2 to 2 µm. If the thickness falls below 0.1 µm, the TiBNO layer can be insufficient in terms of the effect of enhancing adhesion to the aluminum oxide layer. Even if the thickness exceeds 3 µm, the effect is not correspondingly enhanced, and such a layer is economically disadvantageous.

The TiBNO layer can be formed on the substrate directly or with another layer disposed therebetween. The method used for forming (depositing) the TiBNO layer is not limited to any particular method, and the layer may be formed by any method, for example, a known method such as chemical vapor deposition (CVD) or physical vapor deposition (PVD).

The coating according to the present invention preferably has compressive residual stress in at least one layer thereof, more preferably, in the aluminum oxide layer, to achieve excellent toughness. The compressive residual stress is preferred to reduce the rate of breakage occurring when the indexable insert is attached to a cutting tool and to provide excellent fracture resistance during cutting, particularly in the case where there is substantially no coating on a polished seating face, as in the present application.

Compressive residual stress is one of the types of internal stress (specific strain) occurring in the coating and is represented by a negative (-) value (the unit "GPa" is used in the present invention); that is, a higher compressive residual stress is represented by a larger absolute value and a lower compressive residual stress is represented by a smaller absolute value. On the other hand, tensile residual stress is another type of internal stress (specific strain) occurring in the coating and is represented by a positive (+) value.

The method used for applying such compressive residual stress is not limited to any particular method. For example, if the coating is formed by CVD, compressive residual stress can be applied to the coating through a treatment such as blasting, shot peening, barrel treatment, brushing, or ion implantation. If the coating is formed by PVD, the above treatment is not required because compressive residual stress has already been applied to the coating during the formation thereof. In this case, however, the coating may be optionally subjected to the above treatment.

The absolute value of the compressive residual stress is preferably 0.2 GPa or more, more preferably 0.5 GPa or more. If the absolute value falls below 0.2 GPa, the compressive residual stress may fail to provide sufficient roughness. Although higher absolute values are preferred in terms of toughness, absolute values exceeding 8 GPa are not preferred because the coating itself can peel off.

Specifically, the aluminum oxide layer preferably has a compressive residual stress of 0.2 GPa or more, more preferably 0.5 GPa or more, in absolute value. More specifically, the aluminum oxide layer is preferably exposed as the outermost layer of the coating at least in the portions involved in cutting and has a compressive residual stress of 0.2 GPa or more, more preferably 0.5 GPa or more, in absolute value. These portions are probably most responsible for fracture resistance because they come into direct contact with a workpiece during cutting.

The above residual stresses (both compressive residual stress and tensile residual stress) can be measured by a sin²ψ method using an X-ray stress analyzer. These residual stresses can be determined by measuring stresses at any ten points selected on the coating by the sin²ψ method (preferably, the selected points are separated from each other by a distance of 0.5 mm or more so that typical values can be measured) and then averaging the measured stresses.

The sin²ψ method using X-rays is widely used as a method for measuring residual stress on a polycrystalline material. For example, a method detailed on pages 54 to 67 of "X-Sen Oryoku Sokuteiho (Methods for X-Ray Stress Measurement)" (The Society of Materials Science, Japan, published in 1981 by Yokendo Co., Ltd.) can be used.

The above residual stresses can also be measured by Raman spectrometry, which advantageously allows local measurement within a narrow range, for example, a spot diameter of 1 µm. The measurement of residual stress by Raman spectrometry is popular and, for example, a method described on pages 264 to 271 of "Hakumaku No Rikigakuteki Tokusei Hyoka Gijutu (Techniques for Evaluation of Mechanical Properties of Thin Films)" (Sipec Corporation (renamed Realize Advanced Technology Limited), published in 1992) can be used.

### [Structure of coating]

The coating according to the present invention preferably includes a base layer and a usage-indicating layer formed on the base layer. The base layer functions mainly to improve the properties of the indexable insert, such as wear resistance and toughness. The usage-indicating layer functions mainly to indicate the usage of the cutting-edge ridge portions. The base layer and the usage-indicating layer therefore preferably have different colors and high color contrast. In addition, the usage-indicating layer preferably has the function of readily discoloring when an adjacent cutting-edge ridge portion is used. The usage-indicating layer itself can be discolored, or a discolored appearance can be imparted thereto when the underlying base layer is exposed as the usage-indicating layer peels off. From this viewpoint, the usage-indicating layer preferably has lower wear resistance than the base layer.

The base layer is as exemplified in the above description of the coating. The usage-indicating layer is exemplified by layers similar to the base layer and other layers as described below.

That is, the usage-indicating layer used can be at least one layer formed of at least one metal (element), or an alloy thereof, selected from the group consisting of the elements of Groups IVA, VA, and VIA of the periodic table of elements, aluminum, silicon, copper, platinum, gold, silver, palladium, iron, cobalt, and nickel.

For example, if the base layer includes an Al₂O₃ layer as the outermost layer and thus has a nearly black appearance, a TiN layer (gold) or a chromium layer (silver) can be used as the usage-indicating layer to provide relatively high color contrast.

The usage-indicating layer is preferably thinner than the base layer. The usage-indicating layer preferably has a thickness (the total thickness if the usage-indicating layer includes two or more layers) of 0.05 to 2 µm, more preferably 0.1 to 0.5 µm. If the thickness falls below 0.05 µm, a uniform usage-indicating layer is industrially difficult to form in a predetermined portion. In this case, the usage-indicating layer can cause color unevenness, thus leading to degraded appearance. Even if the thickness exceeds 2 µm, the function of the usage-indicating layer is not correspondingly enhanced, and such a layer is economically disadvantageous.

The usage-indicating layer is preferably formed on the base layer in part or the entirety of a portion of the rake face other than the portions involved in cutting. The usage-indicating layer is also preferably formed on the base layer in part or the entirety of the flank faces. If the usage-indicating layer is formed in such portions, the layer can facilitate determination of whether the cutting-edge ridge portions have been used without disadvantageously causing a welding of material from the workpiece or degrading the appearance of a workpiece after cutting. The portion of the rake face other than the portions involved in cutting, as described above, refers to a region on the rake face other than regions extending from the cutting-edge ridge portions in the rake-face direction by a width of at least 0.01 mm. The width is generally 0.05 mm or more, more generally 0.1 mm or more.

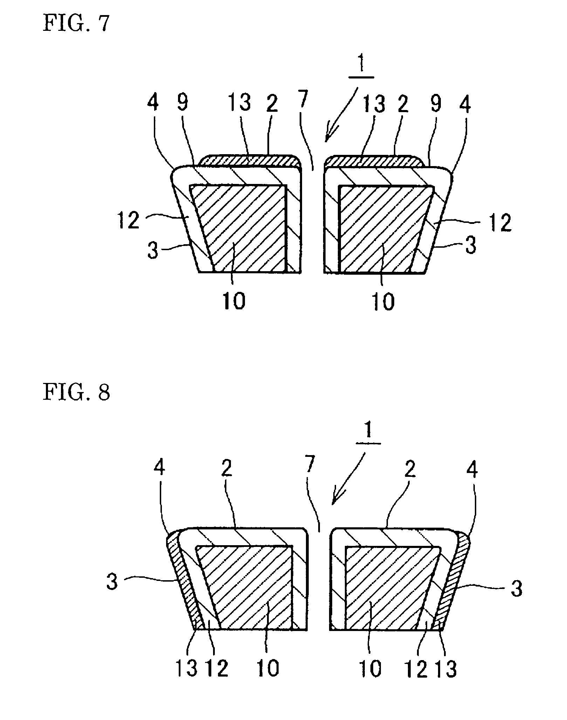

Embodiments using the usage-indicating layer will be described with reference to the drawings. Figures 7 to 11 show indexable inserts having the through-hole 7 shown in Fig. 5. Except for the formation of the coating inside the through-hole 7, these embodiments can also be applied to indexable inserts having no through-hole.

Figure 7 shows an embodiment in which a usage-indicating layer 13 is formed on a base layer 12 in the entire portion of the rake face 2 other than portions 9 involved in cutting. The portions 9 involved in cutting are defined by the width from the cutting-edge ridge portions 4 (or the boundaries between horned portions and a flat portion in the case of Fig. 7). Actually, the portions 9 involved in cutting are defined on the basis of the outermost surface of the indexable insert 1 (this also applies to the definition of the width of other portions) because the coating is negligibly thin relative to the indexable insert in terms of defining the width.

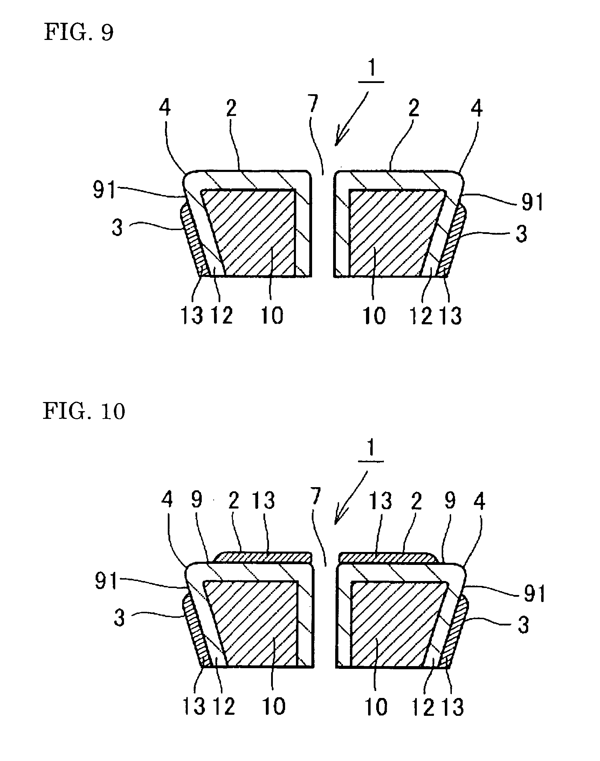

Figure 8 shows an embodiment in which the usage-indicating layer 13 is formed on the base layer 12 in the entire flank faces 3. In this case, the usage-indicating layer 13 may also be formed on the base layer 12 in the entire portions of the flank faces 3 other than portions 91 involved in cutting, as shown in Fig. 9. The portions 91 involved in cutting refer to regions on the flank faces 3 other than regions extending from the cutting-edge ridge portions 4 in the flank-face direction by a width of at least 0.01 mm.

Figure 10 shows an embodiment in which the usage-indicating layer 13 is formed on the base layer 12 in the entire portion of the rake face 2 other than the portions 9 involved in cutting and in the entire portions of the flank faces 3 other than the portions 91 involved in cutting. In this embodiment, the base layer is exposed as the outermost layer at least in the portions involved in cutting. If the base layer includes an aluminum oxide layer as the outermost layer, the aluminum oxide layer is exposed as the outermost layer at least in the portions involved in cutting.

Figure 11 shows the same embodiment as in Fig. 7 except that the usage-indicating layer 13 is also formed on the hole wall of the through-hole 7. If the indexable insert 1 has the through-hole 7, the usage-indicating layer 13 may or may not be formed on the hole wall of the through-hole 7; the present invention is effective in either case.

The usage-indicating layer is formed in the entire surface of any portion in the embodiments described above, although the layer may also be formed in part of the surface of the portion.

### [Examples]

The present invention will be described in more detail with reference to the examples below, although the invention is not limited to these examples.

A cemented carbide powder having a composition including 87.8% by mass of WC, 1.7% by mass of TaC, and 10.5% by mass of cobalt was pressed and sintered in a vacuum atmosphere at 1,400°C for one hour to prepare sintered compacts. Cutting-edge ridge portions of the sintered compacts were then subjected to horning using a SiC brush (in which the cutting-edge ridge portions were rounded to a radius (R) of about 0.05 mm between a rake face and flank faces) to prepare cemented carbide substrates of indexable inserts having the same shape as the cutting insert SEMT13T3AGSN-G (manufactured by Sumitomo Electric Hardmetal Corp.). These indexable inserts had a rake face and a seating face.

Next, coatings (Nos. 1 to 17) shown in Table I below were formed on the substrates.

**[Table I]**

| No. | Coating *Values in parentheses indicate the thicknesses of layers (unit: µm). |
|---|---|
| 1 | TiN(0.5)/MT-TiCN(3.1)/TiN(0.4) |
| 2 | TiN(0.2)/MT-TiCN(2.1)/κ-Al₂O₃(1.4)/TiN(0.4) |
| 3 | MT-TiCN(4.2)/HT-TiCN(1.1)/α-Al₂O₃(3.2) |
| 4 | TiN(0.3)/MT-TiCN(4.2)/HT-TiCN(1,1)α-Al₂O₃(3.2)/TiN(0.5) |
| 5 | TiC(0.4)/HT-TiCN(1.8)/ZrO₂(1.0)/TiN(0.3) |
| 6 | TiCN(1.2)/HT-TiCN(1.4)/Al₂O₃-3at%ZrO₂(1.0)/TiN(0.3) |
| 7 | TiN(0.3)/MT-TiCN(3.2)/TiBN(0.4)/κ-Al₂O₃(1.4) |
| 8 | TiN(0.4)/MT-TiCN(2.4)/TiBN(0.4)/α-Al₂O₃(2.3) |
| 9 | TiN(0.2)/MT-TiCN(1.9)/TiC(1.4)/TiBN(0.4)/κ-Al₂O₃(1.4) |
| 10 | TiN(0.3)/MT-TiCN(2.1)/TiC(1.6)/TiBN(0.3)/α-Al₂O₃(2.4) |
| 11 | TiN(0.1)/MT-TiCN(3.0)/HT-TiCN(1.1)/TiN(0.1)/κ-Al₂O₃(2.1)/TiN(0.3) |
| 12 | TiN(0.4)/MT-TiCN(2.4)/TiBN(0.4)/α-Al₂O₃(2.3)/TiN(0.3) |
| 13 | TiN(0.2)/MT-TiCN(1.9)/TiC(1.4)/TiBN(0.4)/κ-Al₂O₃(1.4)/TiN(0.4) |
| 14 | TiN(0.3)/MT-TiCN(2.1)/TiC(1.6)/TiBNO(0.3)/α-Al₂O₃(2.4)/TiN(0.3) |
| 15 | TiAlN(2.2)/α-Al₂O₃(2.4)/TiN(0.5) |
| 16 | CrAlN(3,1)/TiBN(0.6)/κ-Al₂O₃(1.5) |
| 17 | TiN(0.2)/TiAlN(2.7)/TiCN(0.4) |

| | |
|---|---|
| In the above table, the symbol "MT-" indicates a layer formed by MT-CVD, and the symbol "HT⁻" indicates a layer formed by HT-CVD. The symbol "Al₂O₃-3at%ZrO₂" indicates an Al₂O₃ layer containing 3 atomic percent of ZrO₂. | |

The layers of the coatings were sequentially formed on the substrates in order from left to right in Table I above. Coating Nos. 1 to 14 were formed by a known CVD process, and coating Nos. 15 to 17 were formed by a known ion plating process.

After the above coatings were formed over the entire surfaces of the substrates, the seating faces of the indexable inserts were polished using a diamond grinding wheel (#270) to remove the coatings from the seating faces, where the surfaces of the substrates were exposed and polished. Thus, indexable insert Nos. 1 to 36 shown in Tables II and III were produced.

In Tables II and III, indexable insert Nos. 18 to 36 had the same structures as corresponding ones of indexable insert Nos. 1 to 15 including the coatings of the same coating numbers. The entire coatings of indexable insert Nos. 18 to 36 were subjected to blasting (abrasive particles: alumina sand No. 120 (average particle size: 100 µm); pressure: 0.3 MPa) (for indexable insert Nos. 29, 31, 33, 35, and 36, the blasting was continued until the outermost layer of the coating, namely, the TiN layer (usage-indicating layer), was removed at least from the portions involved in cutting and the aluminum oxide layer (the outermost layer of the base layer) was exposed in the portions as the outermost layer). As a result, the coatings (the portions where the aluminum oxide layer was exposed as the outermost layer for indexable insert Nos. 29, 31, 33, 35, and 36) had compressive residual stress (the blasting may or may not be performed on the seating face, and the present application is effective in either case). Tables II to IV show the layers under measurement of residual stress in the coatings and stresses applied thereto.

The seating faces of the substrates of indexable insert Nos. 37 to 39 shown in Table III were subjected to the same polishing treatment as described above in advance before the coatings were formed with the seating faces masked using a jig. No coating was therefore formed on the seating faces of the substrates, which were exposed as polished surfaces. The inventors confirmed that the formation of the coatings did not affect the surface roughness Rₐ or flatness of the seating faces.

Indexable insert Nos. 40 to 42 shown in Table III were subjected to polishing treatments different from the above polishing treatment. For indexable insert No. 40, the seating face was polished using an elastic grinding wheel after the formation of the coating to remove the coating therefrom and form a polished surface, and the TiN layer (usage-indicating layer) was then removed at least from the portions involved in cutting through blasting to expose the aluminum oxide layer (the outermost layer of the base layer) as the outermost layer in the portions involved in cutting. For indexable insert No. 41, the seating face was polished using a diamond brush after the formation of the coating to remove the coating therefrom and form a polished surface, and the TiN layer (usage-indicating layer) was then removed at least from the portions involved in cutting through blasting to expose the aluminum oxide layer (the outermost layer of the base layer) as the outermost layer in the portions involved in cutting. For indexable insert No. 42, the seating face was polished using a buff after the formation of the coating to remove the coating therefrom and form a polished surface, and the TiN layer (usage-indicating layer) was then removed at least from the portions involved in cutting through blasting to expose the aluminum oxide layer (the outermost layer of the base layer) as the outermost layer in the portions involved in cutting.

Indexable insert Nos. 43 to 59 shown in Table IV, which are comparative examples, had the same structures as indexable insert Nos. 1 to 17, respectively, except that substrates having a prepolished seating face without a sintered surface were used instead of the above substrates and the coating was not removed therefrom by polishing.

In Tables II to IV, indexable insert Nos. 1 to 42 are examples of the present application (marked with "Uncoated" in the column "Coating on seating face" because the seating face was uncoated), and indexable insert Nos. 43 to 59 are comparative examples (marked with "Coated" in the column "Coating on seating face" because the seating face was coated).

Indexable insert Nos. 1 to 59 were subjected to a runout test, a surface roughness test, a wear resistance test, and an interrupted cutting test under the conditions described below. The results of these tests are shown in Tables II to IV. In the runout test, runout was measured, and a lower measurement indicates higher runout accuracy. In the surface roughness test, the surface roughness (R_{Z}, according to JIS B0601:2001 using an instrument according to JIS B0651:1996) of a workpiece was measured, and the conditions of a machined surface of the workpiece were observed. A lower surface roughness R_{Z} and a machined surface closer to a mirror finish indicate higher workpiece smoothness. In the wear resistance test, flank face wear (V_{B}) was measured, and the amount of welding on a cutting edge was observed. A smaller amount of flank face wear (V_{B}) and a smaller amount of welding indicate higher wear resistance. In the interrupted cutting test, the number of impacts applied to the indexable inserts until they were fractured was measured. A larger number of impacts applied indicates higher toughness.

### [Runout test]

In the runout test, a cutter that could be equipped with seven indexable inserts (model: WGC4160R (manufactured by Sumitomo Electric Hardmetal Corp.)) was used as a cutting tool. Numbers 1 to 7 were assigned to insert attachment positions of the cutter in advance, and seven indexable inserts of each type shown in Tables II to IV were attached to the cutter. Differences in height between the position (height) of a cutting edge of the indexable insert attached to position No. 1, which is a reference position, and those of cutting edges of the indexable inserts attached to positions Nos. 2 to 7 were measured, and the absolute value of the largest difference measured was determined as runout. The same runout test was also performed using seven reference inserts for inspection of runout (master inserts for inspection with extremely high dimensional accuracy) attached to the same cutter. The runout of the inserts was determined to be not more than 0.005 mm. Because the reference inserts were assumed to have substantially no dimensional error, the inventors confirmed that the specific dimensional error of the cutter used in this test between position Nos. 1 to 7 was not more than 0.005 mm.

### [Surface roughness test]

Cutting tool: cutter (model: WGC4160R (manufactured by Sumitomo Electric Hardmetal Corp.))
Workpiece: S35C
Cutting speed: 100 m/min
Depth of cut: 2.0 mm
Feed: 0.1 mm/rev.
Dry/Wet: dry
The workpiece was cut under the above conditions, and the surface roughness R_{Z} thereof was measured. Also, the conditions of a machined surface of the workpiece was observed and evaluated according to the following scale, where larger numbers indicate better conditions (closer to a mirror finish). This test was performed with only one indexable insert attached to the cutter.
7: mirror-finished
6: very nearly mirror-finished
5: nearly mirror-finished
4: close to a mirror finish
3: slightly dull
2: dull
1: extremely dull

### [Wear resistance test]

### Cutting tool: cutter (model: WGC4160R (manufactured by Sumitomo Electric Hardmetal Corp.))

Workpiece: SCM435
Cutting speed: 220 m/min
Depth of cut: 2.0 mm
Feed: 0.31 mm/rev.
Cutting length: 12 m
Dry/Wet: wet
The workpiece was cut under the above conditions, and the flank face wear (V_{B}) thereof was measured. Also, the conditions of welding on the cutting edge was observed and evaluated according to the following scale, where larger numbers indicate higher wear resistance. This test was performed with only one indexable insert attached to the cutter.
5: the minimum amount of welding
4: a small amount of welding
3: a moderate amount of welding
2: a large amount of welding
1: a very large amount of welding

### [Interrupted cutting test]

### Cutting tool: cutter (model: WGC4160R (manufactured by Sumitomo Electric Hardmetal Corp.))

Workpiece: SCM440 (round bar with four grooves)
Cutting speed: 180 m/min
Depth of cut: 1.5 mm
Feed: 0.35 mm/rev.
Dry/Wet: wet
The workpiece was cut under the above conditions. Only one indexable insert was attached to the cutter, and the number of impacts applied to the insert until it was fractured was measured. This measurement was performed six times to determine the average number of impacts applied.

**[Table II]**

| Insert No. | No. | Coating on seating face | Residual stress in Coating | | Runout test (mm) | Surface roughness test | | Wear resistance test | | Interrupted cutting test (number of impacts) |
|---|---|---|---|---|---|---|---|---|---|---|
| | | | Layer under measurement | Stress (GPa) | | Surface roughness (Rz) | Conditions of machined surface | Flank face wear (mm) | Amount of welding | |
| 1 | 1 | Uncoated | MT-TiCN | 0.3 | 0.021 | 2.6 | 5 | 0.121 | 3 | 7430 |
| 2 | 2 | Uncoated | κ-Al₂O₃ | 0.2 | 0.030 | 2.5 | 6 | 0.083 | 5 | 7615 |
| 3 | 3 | Uncoated | α-Al₂O₃ | 0.3 | 0.022 | 2.0 | 4 | 0.065 | 5 | 7318 |
| 4 | 4 | Uncoated | α-Al₂O₃ | 0.3 | 0.030 | 2.5 | 5 | 0.061 | 4 | 6215 |
| 5 | 5 | Uncoated | ZrO₂ | 0.3 | 0.025 | 2.4 | 5 | 0.059 | 4 | 6418 |
| 6 | 6 | Uncoated | HT-TiCN | 0.4 | 0.023 | 2.6 | 5 | 0.058 | 4 | 6018 |
| 7 | 7 | Uncoated | κ-Al₂O₃ | 0.3 | 0.018 | 1.9 | 7 | 0.073 | 5 | 7482 |
| 8 | 8 | Uncoated | α-Al₂O₃ | 0.2 | 0.016 | 1.9 | 7 | 0.065 | 5 | 7549 |
| 9 | 9 | Uncoated | κ-Al₂O₃ | 0.3 | 0.020 | 1.8 | 7 | 0.070 | 5 | 7673 |
| 10 | 10 | Uncoated | α-Al₂O₃ | 0.3 | 0.019 | 2.5 | 7 | 0.064 | 5 | 7357 |
| 11 | 11 | Uncoated | κ-Al₂O₃ | 0.3 | 0.021 | 2.6 | 5 | 0.088 | 4 | 6126 |
| 12 | 12 | Uncoated | α-Al₂O₃ | 0.2 | 0.023 | 2.4 | 5 | 0.081 | 4 | 6649 |
| 13 | 13 | Uncoated | κ-Al₂O₃ | 0.3 | 0.009 | 2.5 | 5 | 0.085 | 4 | 6315 |
| 14 | 14 | Uncoated | α-Al₂O₃ | 0.3 | 0.012 | 2.6 | 5 | 0.083 | 4 | 6613 |
| 15 | 15 | Uncoated | α-Al₂O₃ | -3.2 | 0.012 | 3.1 | 5 | 0.105 | 4 | 9130 |
| 16 | 16 | Uncoated | κ-Al₂O₃ | -3.1 | 0.021 | 1.4 | 7 | 0.113 | 5 | 10480 |
| 17 | 17 | Uncoated | TiAlN | -3.1 | 0.010 | 3.2 | 5 | 0.120 | 3 | 13352 |
| 18 | 1 | Uncoated | MT-TiCN | -0.1 | 0.021 | 2.1 | 4 | 0.114 | 4 | 6415 |
| 19 | 2 | Uncoated | κ-Al₂O₃ | -0.3 | 0.013 | 1.6 | 6 | 0.079 | 5 | 8813 |
| 20 | 3 | Uncoated | α-Al₂O₃ | -0.2 | 0.019 | 2.0 | 7 | 0.060 | 5 | 8846 |
| 21 | 4 | Uncoated | α-Al₂O₃ | -0.4 | 0.020 | 1.5 | 6 | 0.054 | 5 | 8315 |

**[Table III]**

| Insert No. | Coating No. | Coating on seating face | Residual stress in coating | | Runout test (mm) | Surface roughness test | | Wear resistance test | | Interrupted cutting test (number of impacts) |
|---|---|---|---|---|---|---|---|---|---|---|
| | | | Layer under measurement | Stress (GPa) | | Surface roughness (Rz) | Conditions of machined surface | Flank face wear (mm) | Amount of welding | |
| 22 | 5 | Uncoated | ZrO₂ | -0.3 | 0.013 | 1.4 | 6 | 0.052 | 5 | 7624 |
| 23 | 6 | Uncoated | HT-TiCN | -0.4 | 0.020 | 1.5 | 6 | 0.051 | 5 | 7345 |
| 24 | 7 | Uncoated | κ-Al₂O₃ | -0.3 | 0.016 | 1.4 | 7 | 0.064 | 5 | 8315 |
| 25 | 8 | Uncoated | α-Al₂O₃ | -0.4 | 0.014 | 1.2 | 7 | 0.055 | 5 | 8662 |
| 26 | 9 | Uncoated | κ-Al₂O₃ | -0.4 | 0.013 | 1.1 | 7 | 0.056 | 5 | 8645 |
| 27 | 10 | Uncoated | α-Al₂O₃ | -0.6 | 0.011 | 1.3 | 7 | 0.049 | 5 | 8615 |
| 28 | 11 | Uncoated | κ-Al₂O₃ | -0.4 | 0.021 | 1.4 | 6 | 0.070 | 5 | 7024 |
| 29 | 11 | Uncoated | κ-Al₂O₃ | -2.3 | 0.022 | 1.4 | 7 | 0.068 | 5 | 14031 |
| 30 | 12 | Uncoated | α-Al₂O₃ | -0.3 | 0.030 | 1.5 | 6 | 0.068 | 5 | 7784 |
| 31 | 12 | Uncoated | α-Al₂O₃ | -3.4 | 0.019 | 1.4 | 7 | 0.064 | 5 | 13138 |
| 32 | 13 | Uncoated | κ-Al₂O₃ | -0.5 | 0.028 | 1.5 | 6 | 0.069 | 5 | 7959 |
| 33 | 13 | Uncoated | κ-Al₂O₃ | -4.5 | 0.021 | 1.4 | 7 | 0.063 | 5 | 15568 |
| 34 | 14 | Uncoated | α-Al₂O₃ | -0.5 | 0.023 | 1.5 | 6 | 0.067 | 5 | 7799 |
| 35 | 14 | Uncoated | α-Al₂O₃ | -6.9 | 0.011 | 1.5 | 7 | 0.062 | 5 | 14862 |
| 36 | 15 | Uncoated | α-Al₂O₃ | -3.8 | 0.020 | 1.4 | 7 | 0.082 | 5 | 13246 |
| 37 | 15 | Uncoated | α-Al₂O₃ | -3.2 | 0.010 | 3.1 | 6 | 0.083 | 5 | 14405 |
| 38 | 16 | Uncoated | κ-Al₂O₃ | -3.1 | 0.020 | 1.4 | 7 | 0.096 | 5 | 13998 |
| 39 | 17 | Uncoated | TiAlN | -3.1 | 0.010 | 3.2 | 5 | 0.099 | 4 | 15018 |
| 40 | 12 | Uncoated | α-Al₂O₃ | -3.4 | 0.021 | 1.5 | 7 | 0.065 | 5 | 13015 |
| 41 | 12 | Uncoated | α-Al₂O₃ | -3.4 | 0.020 | 1.4 | 7 | 0.064 | 5 | 12998 |
| 42 | 12 | Uncoated | α-Al₂O₃ | -3.4 | 0.020 | 1.5 | 7 | 0.065 | 5 | 13351 |

**[Table IV]**

| Insert No. | Coating No. | Coating on seating face | Residual stress in coating | | Runout test (mm) | Surface roughness test | | Wear resistance test | | Interrupted cutting test (number of impacts) |
|---|---|---|---|---|---|---|---|---|---|---|
| | | | Layer under measurement | Stress (GPa) | | Surface roughness (Rz) | Conditions of machined surface | Flank face wear (mm) | Amount of welding | |
| 43 | 1 | Coated | MT-TiCN | 0.3 | 0.06 | 4.4 | 2 | 0.143 | 2 | 5218 |
| 44 | 2 | Coated | κ-Al₂O₃ | 0.2 | 0.06 | 4.3 | 2 | 0.104 | 3 | 5101 |
| 45 | 3 | Coated | α-Al₂O₃ | 0.3 | 0.05 | 3.9 | 3 | 0.083 | 3 | 4998 |
| 46 | 4 | Coated | α-Al₂O₃ | 0.3 | 0.05 | 4.8 | 2 | 0.085 | 3 | 5018 |
| 47 | 5 | Coated | ZrO₂ | 0.3 | 0.05 | 4.7 | 2 | 0.087 | 3 | 4218 |
| 48 | 6 | Coated | HT-TiCN | 0.4 | 0.06 | 4.9 | 2 | 0.091 | 3 | 4088 |
| 49 | 7 | Coated | κ-Al₂O₃ | 0.3 | 0.05 | 3.6 | 3 | 0.089 | 3 | 5873 |
| 50 | 8 | Coated | α-Al₂O₃ | 0.2 | 0.05 | 3.5 | 3 | 0.082 | 3 | 5946 |
| 51 | 9 | Coated | κ-Al₂O₃ | 0.3 | 0.05 | 3.5 | 3 | 0.095 | 3 | 5197 |
| 52 | 10 | Coated | α-Al₂O₃ | 0.3 | 0.06 | 4.8 | 3 | 0.089 | 3 | 5886 |
| 53 | 11 | Coated | κ-Al₂O₃ | 0.3 | 0.06 | 3.9 | 2 | 0.102 | 3 | 4068 |
| 54 | 12 | Coated | α-Al₂O₃ | 0.2 | 0.06 | 4.4 | 2 | 0.104 | 3 | 4558 |
| 55 | 13 | Coated | κ-Al₂O₃ | 0.3 | 0.05 | 4.5 | 2 | 0.113 | 3 | 4387 |
| 56 | 14 | Coated | α-Al₂O₃ | 0.3 | 0.06 | 4.6 | 2 | 0.104 | 3 | 4998 |
| 57 | 15 | Coated | α-Al₂O₃ | -3.2 | 0.05 | 5.0 | 2 | 0.119 | 3 | 7128 |
| 58 | 16 | Coated | κ-Al₂O₃ | -3.1 | 0.06 | 3.9 | 3 | 0.144 | 3 | 7966 |
| 59 | 17 | Coated | TiAlN | -3.2 | 0.06 | 4.8 | 2 | 0.155 | 3 | 8648 |

As shown in Tables II to IV, the indexable inserts according to the present invention had significantly higher runout accuracy than those of the comparative examples. Accordingly, the indexable inserts according to the present invention achieved better results in the surface roughness test, the wear resistance test, and the interrupted cutting test than those of the comparative examples. These results obviously show that it is important that the substrate be exposed in the seating face without the coating formed thereon (and that the seating face be a polished surface). These tests demonstrated that increased runout accuracy provides excellent results in various cutting processes. The indexable inserts of the comparative examples also made larger cutting noises than the corresponding indexable inserts according to the present invention.

The above tests were also performed under the conditions described below (where the same substrate composition and the same coating compositions were used), and the inventors confirmed that similar results were achieved in such cases. That is, similar results were achieved under the conditions that the shape of indexable insert and the model of cutting tool (cutter) were changed to the indexable insert SDKN42MT (manufactured by Sumitomo Electric Hardmetal Corp.) and the cutter FPG4100R (manufactured by Sumitomo Electric Hardmetal Corp.), respectively, and to the indexable insert CNMM190612N-MP (manufactured by Sumitomo Electric Hardmetal Corp.) and the cutting tool PCBNR4040-64 (manufactured by Sumitomo Electric Hardmetal Corp.), respectively.

For indexable insert Nos. 1, 2, 4, 5, 6, 11, 12, 13, 14, and 15, the outermost layer of the coating was a usage-indicating layer (i.e., the TiN layer). The same tests as above were performed on these indexable inserts with the usage-indicating layers thereof formed as in Fig. 7 or 8. According to the results, these inserts could achieve the same excellent effect as above, and the usage-indicating layers could significantly facilitate determination of whether the cutting-edge ridge portions had been used.

For indexable insert Nos. 1 to 42 according to the present invention (except for Nos. 37 to 39), the coating was formed on surfaces of the substrate with a sintered surface (untreated surfaces that were not subjected to, for example, polishing). The inventors confirmed that similar results were achieved in the case where the surfaces of the substrate were polished in advance before the coating was formed thereon and was treated as described above.

For indexable insert Nos. 43 to 59 of the comparative examples, the coating was formed on the prepolished seating faces of the substrate. The same tests as above were performed on these indexable inserts with the coatings thereof formed on surfaces of the substrates with a sintered surface and treated as in the comparative examples. As in the comparative examples, these inserts could not provide such an excellent effect as provided by the indexable inserts according to the present invention.

The cutting tool used in the above examples was a cutter, and the indexable inserts used were positive inserts, although the present invention is also effective for negative and positive inserts for turning.

While the embodiments and examples of the present invention have been described above, combinations of the embodiments and the examples are also originally assumed.

The embodiments and examples disclosed herein are merely illustrative in all respects and should not be construed as limitative. It is intended that the scope of the present invention be not defined by the above description, but by the claims, and include all modifications within the meaning and scope of the claims and equivalents thereof.

## Claims

1. An indexable insert (1) having at least a rake face (2) and a seating face (5),
the indexable insert (1) comprising a substrate (10) and a coating (11) formed on the substrate (10),
the substrate (10) being exposed in the seating face (5) without the coating (11) formed thereon.

2. The indexable insert (1) according to Claim 1, wherein the seating face (5) is a polished surface.

3. The indexable insert (1) according to Claim 1, wherein the coating includes at least one layer comprising a compound containing at least one element selected from the group consisting of the elements of Groups IVA, VA, and VIA of the periodic table of elements, aluminum, and silicon and at least one element selected from the group consisting of carbon, nitrogen, oxygen, and boron.

4. The indexable insert (1) according to Claim 3, wherein the coating (11) includes at least an aluminum oxide layer.

5. The indexable insert (I) according to Claim 4, wherein the aluminum oxide layer has compressive residual stress.

6. The indexable insert (1) according to Claim 3, wherein the coating (11) includes at least a TiBN layer and an aluminum oxide layer formed thereon.

7. The indexable insert (1) according to Claim 3, wherein the coating (11) includes at least a TiBNO layer and an aluminum oxide layer formed thereon.

8. The indexable insert (1) according to Claim 3, wherein the outermost layer of the coating (11) is an aluminum oxide layer at least in a portion involved in cutting.

9. The indexable insert (1) according to Claim 8, wherein the aluminum oxide layer is exposed as the outermost layer of the coating (11) at least in the portion involved in cutting by removing any layer comprising a compound other than aluminum oxide from over the aluminum oxide layer.

10. The indexable insert (1) according to Claim 1, wherein the coating (11) comprises a base layer (12) and a usage-indicating layer (13) formed on the base layer (12).

11. The indexable insert (1) according to Claim 10, wherein the usage-indicating layer (13) is formed on the base layer (12) in part or the entirety of a portion of the rake face (2) other than a portion (9) involved in cutting.

12. The indexable insert (1) according to Claim 10, wherein the usage-indicating layer (13) is formed on the base layer (12) in part or the entirety of a flank face (3).

13. The indexable insert (1) according to Claim 1, wherein the substrate (10) comprises a cemented carbide, a cermet, a high-speed steel, a ceramic, a sintered cubic boron nitride compact, a sintered diamond compact, or a sintered silicon nitride compact.

14. The indexable insert (1) according to Claim 1, wherein the indexable insert (1) is used for drilling, end milling, milling, turning, metal sawing, gear cutting, reaming, tapping, or crankshaft pin milling.

15. The indexable insert (1) according to Claim 1, wherein the indexable insert (1) is a positive insert.
